# EUROPEAN PATENT APPLICATION

(11) **EP 2 792 648 A1**
(43) Date of publication of application: **22.10.2014**
(21) Application number: 12856722.9
(22) Date of filing: 05.09.2012
(51) Int. Cl.: C03B 37/012, G02B 6/00, G02B 6/032

(54) **METHOD FOR MANUFACTURING PHOTONIC BAND GAP FIBER**

(30) Priority: 16.12.2011 JP 2011276125
(71) Applicant: Furukawa Electric Co., Ltd., Chiyoda-ku Tokyo 100-8322 (JP)
(72) Inventor: MUKASA, Kazunori, Tokyo 100-8322 (JP)
(74) Representative: Schwabe - Sandmair - Marx
(86) International application number: PCT/JP2012/072638
(87) International publication number: WO 2013/088795

(57) **Abstract**

A method of manufacturing a photonic bandgap fiber, which includes a core portion and a cladding portion that is formed around the core portion and has holes arranged to form a photonic crystal in which the core portion is a crystal defect, includes forming a preform by inserting, into a jacket tube, hexagonal capillary tubes having tube-holes shapes and outer shapes that are both approximately hexagonal, and drawing the preform. Hereby a photonic bandgap fiber having desired optical characteristics can be manufactured more surely.

## Description

### Field

The present invention relates to a method of manufacturing a photonic bandgap fiber.

### Background

A photonic bandgap fiber (PBGF) is an optical fiber in which holes are arranged in a cladding portion so as to form a photonic crystal. In the photonic bandgap fiber, a photonic bandgap due to two-dimensional Bragg reflection at a wavelength of light to be transmitted is formed by the arranged holes and a core portion as a crystal defect is introduced therein, to realize optical transmission.

For example, Non-Patent Literatures 1 to 3 disclose an air-core-type photonic bandgap fiber whose core portion is a hole. The air-core-type photonic bandgap fiber is able to achieve low bending loss by very strong optical confinement while realizing ultralow non-linearity by enlarging an effective area (A_{eff}). Therefore, the air-core-type photonic bandgap fiber has attracted attention for its application to communication or non-communication fields. Non-Patent Literature 1 discloses a calculation method of optimizing design of profile parameters of a photonic bandgap fiber in detail.

### Citation List

### Patent Literature

[Patent Literature 1] Japanese Laid-open Patent Publication No. 2002-55242
[Patent Literature 2] Japanese Laid-open Patent Publication No. 2002-97034

### [Non-Patent Literature]

[Non-Patent Literature 1] K. Saitoh, et al., OPTICS EXPRESS, Vol. 11, No. 23, 2003, pp3100-3109
[Non-Patent Literature 2] M.N. Petrovich et al., OFC2008, OThR4
[Non-Patent Literature 3] Kazunori Mukasa, et al., The Institute of Electronics, Information and Communication Engineers 2007, General Conference C-3-52

### Summary

### Technical Problem

In general, in case of manufacturing a photonic bandgap fiber, a so-called stack and draw method is used in which circular capillary tubes having inner and outer shapes that are both circular are prepared, inserted and stacked in a circular jacket tube having inner and outer shapes that are both circular to form a preform, and the preform is drawn.

However, in case of manufacturing a photonic bandgap fiber by the conventional stack and draw method using the circular capillary tubes and the circular jacket tube to satisfy profile parameters (design parameters) obtained by calculation in order to realize predetermined optical characteristics, there is a problem that the optical characteristics of the photonic bandgap fiber may sometimes differ from their designed values.

The present invention was conceived in consideration of the above-described circumstances, and it is an object to provide a method of manufacturing a photonic bandgap fiber, by which a photonic bandgap fiber having desired optical characteristics can be manufactured more surely. Solution to Problem

In order to solve the above-described problem and achieve the object, a method of manufacturing a photonic bandgap fiber according to the present invention, which includes a core portion and a cladding portion that is formed around the core portion and has holes arranged to form a photonic crystal in which the core portion is a crystal defect, includes forming a preform by inserting, into a jacket tube, hexagonal capillary tubes having tube-holes shapes and outer shapes that are both approximately hexagonal; and drawing the preform.

Moreover, in the method of manufacturing the photonic bandgap fiber according to the present invention, rod bodies for adjusting spaces are inserted in a space between the jacket tube and the hexagonal capillary tubes in the forming.

Moreover, in the method of manufacturing the photonic bandgap fiber according to the present invention, the rod bodies having outer shapes that are approximately polygonal are used in the forming.

Moreover, in the method of manufacturing the photonic bandgap fiber according to the present invention, the jacket tube having a tube-hole shape that is approximately hexagonal is used in the forming.

Moreover, in the method of manufacturing the photonic bandgap fiber according to the present invention, pentagonal capillary tubes having tube-hole shapes and outer shapes that are both approximately pentagonal are inserted along an inner wall of the jacket tube in the forming

Moreover, in the method of manufacturing the photonic bandgap fiber according to the present invention, in the forming, pentagonal capillary tubes having tube-hole shapes and outer shapes that are both approximately pentagonal are inserted to be positioned at a periphery of a core-forming portion for forming the core portion.

Moreover, in the method of manufacturing the photonic bandgap fiber according to the present invention, capillary tubes including inner peripheral portions and outer peripheral portions that are formed around the inner peripheral portions and have a viscosity lower than that of the inner peripheral portions are used as the pentagonal capillary tubes or the hexagonal capillary tubes in the forming.

Moreover, in the method of manufacturing the photonic bandgap fiber according to the present invention, in the forming, the pentagonal capillary tubes or the hexagonal capillary tubes are inserted such that the number of layers of holes surrounding the core portion becomes equal to or greater than five.

### Advantageous Effects of Invention

The present invention obtains an effect that a photonic bandgap fiber having desired optical characteristics can be manufactured more surely.

### Brief Description of Drawings

FIG. 1 is a schematic sectional view of an example of a photonic bandgap fiber;
FIG. 2 is a diagram illustrating an example of a calculated field distribution of a photonic bandgap fiber;
FIG. 3 is a diagram illustrating calculated wavelength characteristics of confinement loss;
FIG. 4 is a schematic cross-sectional view of a preform to be used in a manufacturing method according to a first embodiment;
FIG. 5 is a schematic cross-sectional view of a preform to be used in a manufacturing method according to a second embodiment;
FIG. 6 is a schematic cross-sectional view of a preform to be used in a manufacturing method according to a third embodiment;
FIG. 7 is a schematic cross sectional view of a preform to be used in a manufacturing method according to a fourth embodiment;
FIG. 8 is a partial enlarged schematic cross-sectional view of a preform to be used in a manufacturing method according to a fifth embodiment;
FIG. 9 is a schematic cross-sectional view of a preform to be used in a conventional manufacturing method; and
FIG. 10 is a schematic cross-sectional view of a photonic bandgap fiber manufactured by a conventional manufacturing method.

### Description of Embodiments

Hereinafter, embodiments of a method of manufacturing a photonic bandgap fiber according to the present invention are described in detail with reference to the drawings. It should be noted that the invention is not limited by the embodiments. In addition, the photonic bandgap fiber is hereinafter referred to as the PBGF as appropriate.

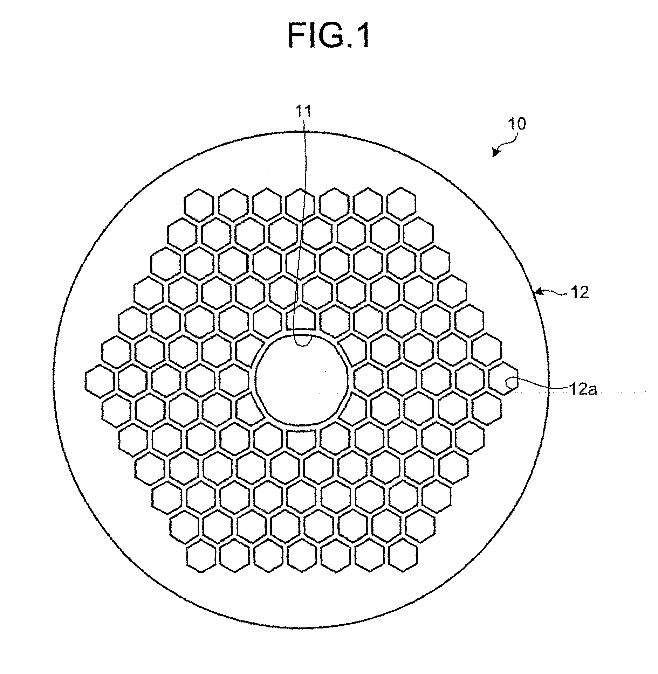

FIG. 1 is a schematic cross-sectional view of an example of a PBGF. As illustrated in FIG. 1, this PBGF 10 includes a core portion 11 having a hole and a cladding portion 12 formed around the core portion 11 and including holes 12a arranged regularly. For example, the cladding portion 12 is made of a silica-based glass, and in particular, preferably made of a pure silica glass containing no dopant for adjusting its refractive index.

This PBGF 10 has a structure in which the holes 12a are arranged in a triangular lattice form so as to form a photonic crystal for forming a photonic bandgap at a desired wavelength, and a region in which the one hole 12a at the center of the triangular lattice and the six holes 12a therearound are to be arranged is substituted with a hole to become the core portion 11 as a crystal defect. This PBGF 10 transmits light confined to the core portion 11 strongly with the above-described structure. It should be noted that such a structure in which the region of the seven holes has been substituted with the core portion is sometimes called a 7-cell-type PBGF. Furthermore, a structure in which a region of twelve holes around these seven holes, that is, a region of these nineteen holes in total has been substituted with a core portion is sometimes called a 19-cell-type PBGF. It should be noted that the 7-cell-type PBGF is preferable since it operates on a single mode more easily (see Non-Patent Literature 2).

The PBGF 10 illustrated in FIG. 1 has five hexagonal layers formed of the holes 12a surrounding the core portion 11. Also, d/A is set to 0.9 or greater, for example, to 0.97 where d is a diameter (hereinafter, referred to as hole diameter) of a hole of each hole 12a and A is a distance (hereinafter, referred to as distance between holes) between centers of adjacent holes 12a. It should be noted that, as disclosed in Non-Patent Literature 1, it is preferable to set the number of hole layers to five or greater and to set the ratio d/A to 0.9 or greater, because confinement loss is thereby reduced. It should be noted that, in case of the 7-cell-type PBGF, a core diameter is approximately 2A, which is twice the distance between holes. Also, in case of the 19-cell-type PBGF, a core diameter is approximately 3A.

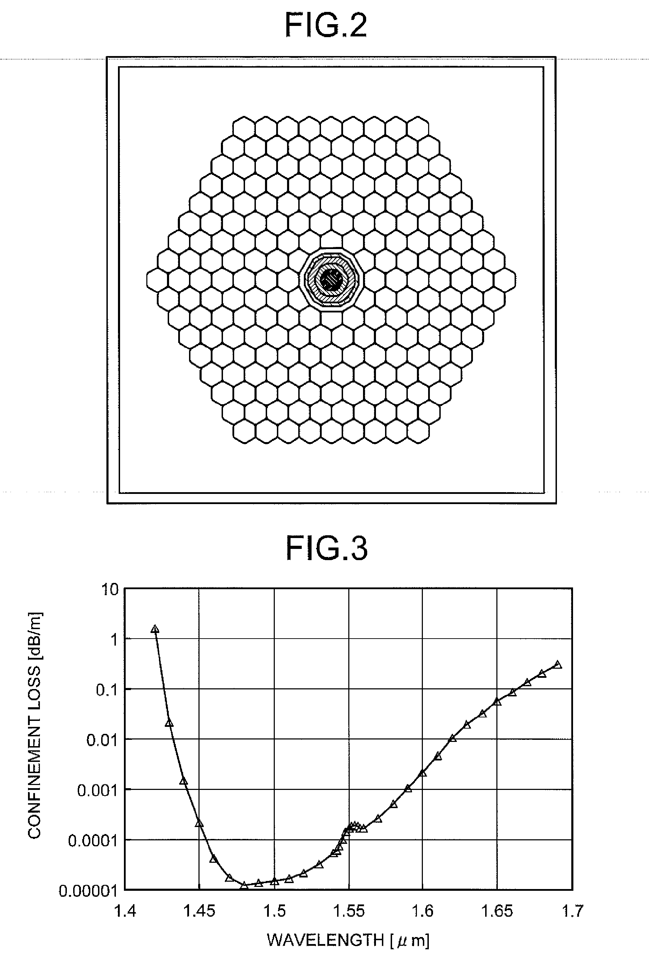

FIG. 2 is a diagram illustrating an example of a calculated field distribution of a PBGF. FIG. 3 is a diagram illustrating calculated wavelength characteristics of confinement loss of the PBGF. It should be noted that, in FIGS. 2 and 3, simulation calculation by a finite element method (FEM) is used. In addition, a constituent material of the PBGF is pure silica glass. In addition, d/A is set to 0.97 and A is set to 4.05 µm. This value of 4.05 µm is a value, reported by Non-Patent Literature 3, at which a photonic bandgap is able to be formed at a wavelength band of 1.5 µm used in optical communications.

In this simulation, the holes had the following shapes. That is, the core portion was octagon shaped with roundness added to each apex thereof. As for a total of twelve holes immediately therearound, hexagons and pentagons with roundness added to each apex thereof were arranged alternately. In addition, as for holes further therearound, hexagons with roundness added to each apex thereof were arranged to place seven layers of holes around the core portion. In addition, a diameter of an approximate circle on a hole of each shape was set as the hole diameter d, and a distance between centers of gravity of the hexagonal shape or the pentagonal shape of adjacent holes was set as the distance between holes A. As described above, in the simulation in FIG. 2 and FIG. 3, a hole was assumed to be a pentagon or hexagon.

As illustrated in FIG. 2, in the PBGF calculated by setting the structure as described above, because the holes were set to be pentagon-shaped or hexagon-shaped, most of a light field was confined to the core portion at the center thereof. In addition, as illustrated in FIG. 3, confinement loss with respect to wavelength λ had a low value of 0.00001 dB/m (0.01 dB/km) at a wavelength of around 1.5 µm and a photonic bandgap was confirmed to be formed.

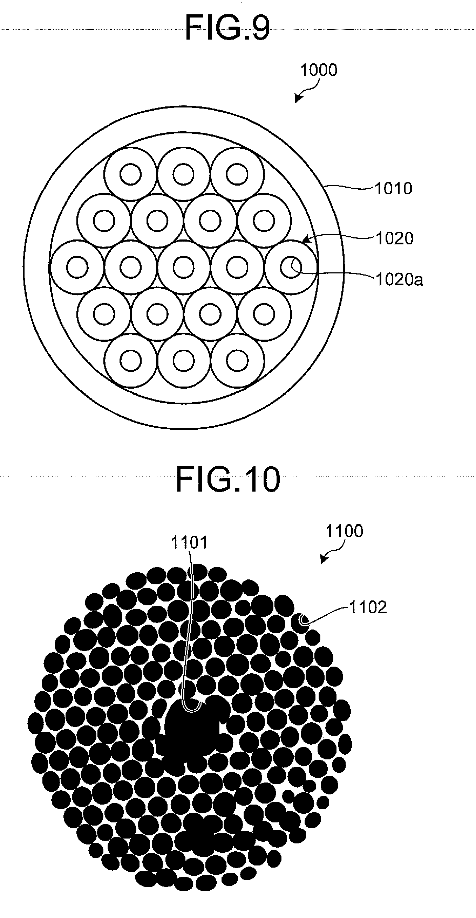

In case of manufacturing such a PBGF, conventionally, as illustrated in FIG. 9, circular capillary tubes 1020 with circular tube-holes 1020a and circular outer shapes are inserted and stacked in a jacket tube 1010, the capillary tubes 1020 in a region to be the core portion are thereafter pulled out to form a preform 1000, and this preform 1000 is drawn.

However, in case of configuring the preform 1000 by using the circular capillary tubes 1020 like this, the percentage of spaces among the capillary tubes in a cross-sectional area of the preform 1000 becomes high, and thus the capillary tubes 1020 become easily deformable when drawing and deformation of the hole structure becomes greater. Because optical characteristics of a PBGF are largely influenced by the hole structure of the cross-section, the optical characteristics of the PBGF manufactured by the conventional method sometimes differ from desired optical characteristics.

For example, FIG. 10 is a schematic cross-sectional view of a PBGF manufactured by a conventional manufacturing method. As illustrated in FIG. 10, a PBGF 1100 manufactured has, in contrast to an ideal shape in which hexagonal holes are arranged in a lattice, holes 1102 that are distorted, and a shape of a core portion 1101 is also distorted. As a result, glass among the holes may sometimes become uneven with thin portions and thick portions. By such structural disorder in a cross section, transmission loss of a PBGF may become as large as a few tens to a few hundreds dB/km.

Furthermore, Patent Literatures 1 and 2 disclose a method using capillary tubes having hexagonal outer shapes. However, in case of using the capillary tubes having the hexagonal outer shapes, it is difficult to obtain preferable d/A, which is 0.9 or greater, at which confinement loss is reduced sufficiently, even if deformation of the holes are suppressed.

In contrast, in a manufacturing method according to a first embodiment described below, because hollow capillary tubes with hexagonally-shaped tube-holes and hexagonal outer shapes are inserted in a hollow jacket tube to form a preform, and this preform is drawn, suppression of deformation of the holes and formation of desired d/Λ are realized simultaneously. As a result, a PBGF having desired optical characteristics are able to be manufactured more surely.

### First Embodiment

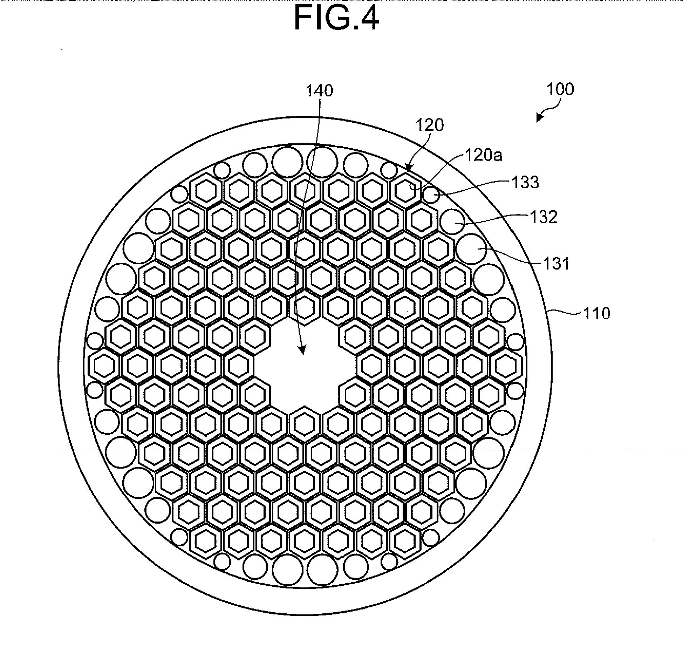

FIG. 4 is a schematic cross-sectional view of a preform used in a manufacturing method according to a first embodiment. As illustrated in FIG. 4, a preform 100 is formed using hexagonal capillary tubes 120 with hexagonal tube-holes 120a and hexagonal outer shapes. Specifically, the preform 100 is formed by inserting and stacking the hexagonal capillary tubes 120 in a circular jacket tube 110, and thereafter pulling out the hexagonal capillary tubes 120 in a region to be a core portion to form a core-forming portion 140. It should be noted that, in forming the preform 100, rod bodies 131 to 133 for adjusting spaces are further inserted into a space between the jacket tube 110 and the hexagonal capillary tubes 120. The rod bodies 131 to 133 are circular and have diameters to fit to a volume of the space. The rod bodies 131 to 133 are preferably solid but may be hollow.

The jacket tube 110, the hexagonal capillary tubes 120, and the rod bodies 131 to 133 are made of silica-based glass, for example, and in particular, are preferably made of pure silica glass containing no dopant for adjusting a refractive index. The outer shapes of the hexagonal capillary tubes 120 and the shapes of the tube-holes 120a are preferably regular hexagons, but may be approximate regular hexagons, and may be of shapes, for example, with rounded apices.

Next, this preform 100 is drawn by a known method. When performing the drawing, the preform 100, whose lower end has been molten and collapsed to be sealed, is installed in a known drawing furnace. Then, a gas pressurizing device is connected to an upper end of the preform 100. Subsequently, the lower end of the preform 100 is heated and molten by a heater and the PBGF 10 is drawn. When performing the drawing, insides of the tube-holes 120a of the hexagonal capillary tubes 120 are pressurized by the gas pressurizing device so that the holes are not collapsed. The use of the preform 100 suppresses deformation of the holes (tube-holes 120a and holes 12a formed by the tube-holes 120a) when performing the drawing and it is easy to obtain a preferable d/A, which is 0.9 or greater. Accordingly, the PBGF 10 having preferable values of confinement loss and other optical characteristics is able to be manufactured more surely.

### Second Embodiment

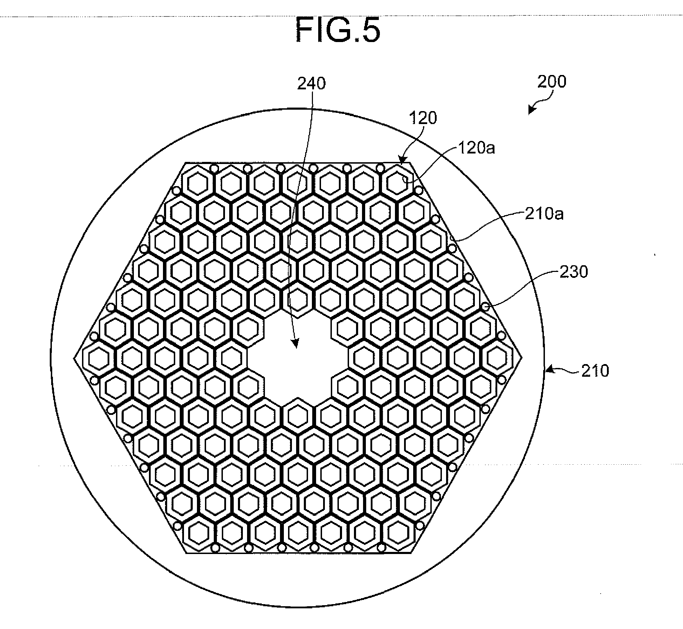

FIG. 5 is a schematic cross-sectional view of a preform to be used in a manufacturing method according to a second embodiment. As illustrated in FIG. 5, a preform 200 is formed using a jacket tube 210 with a tube-hole 210a of a hexagonal shape and a circular outer diameter. Specifically, the preform 200 is formed by inserting and stacking the hexagonal capillary tubes 120 like those in FIG. 4 in the jacket tube 210, and thereafter pulling out the hexagonal capillary tubes 120 in a region to become a core portion thereafter to form a core-forming portion 240. It should be noted that, in forming the preform 200, rod bodies 230 for adjusting spaces are further inserted into a space between the jacket tube 210 and the hexagonal capillary tubes 120. The rod bodies 230 are circular and have diameters fitted to a volume of the space. The rod bodies 230 are preferably solid but may be hollow. The jacket tube 210 and the rod bodies 230 are also made of a silica-based glass for example, and in particular, are preferably made of a pure silica glass containing no dopant for adjusting a refractive index.

Next, by drawing the preform 200 by a known method, deformation of the holes is suppressed, and it is easy to obtain a preferable d/A, which is 0.9 or greater. Accordingly, it is possible to manufacture the PBGF 10 having preferable values of confinement loss and other optical characteristics more surely.

In particular, in the second embodiment, the use of the jacket tube 210 having the tube-hole 210a of a hexagonal shape further decreases the space between the jacket tube 210 and the hexagonal capillary tubes 120. As a result, deformation of the holes is further suppressed. Furthermore, diameters of the rod bodies 230 for adjusting spaces is able to be made smaller, and thus cost of materials for the rod bodies 230 is able to be reduced. In case that inner diameters of the hexagonal capillary tubes 120 are relatively smaller than an inner diameter of the jacket tube 210, the rod bodies 230 may not be used as appropriate.

### Third Embodiment

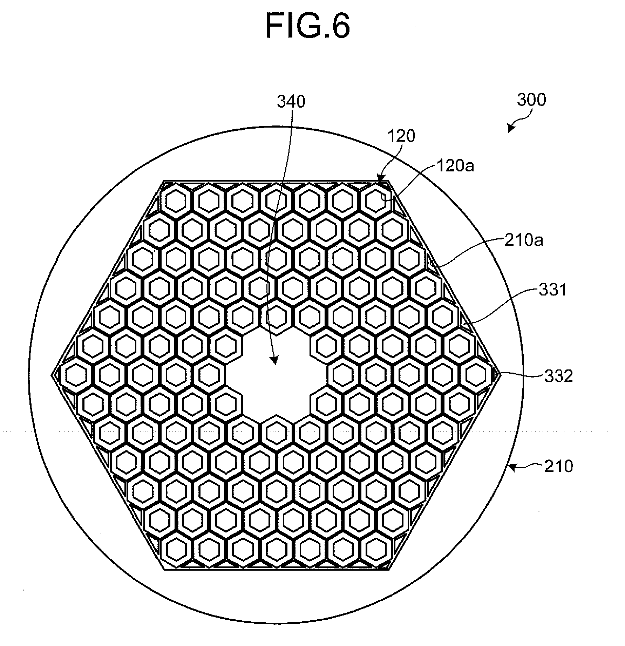

FIG. 6 is a schematic cross-sectional view of a preform to be used in a manufacturing method according to a third embodiment. As illustrated in FIG. 6, a preform 300 is formed by, like the preform 200 according to the second embodiment, inserting and stacking the hexagonal capillary tubes 120 in the jacket tube 210 having the tube-hole 210a of a hexagon, and thereafter forming a core-forming portion 340. However, in the preform 300, rod bodies 331 and 332 for adjusting spaces are inserted into a space between the jacket tube 210 and the hexagonal capillary tubes 120. The rod bodies 331 and 332 are triangular-shaped and have a larger effect of filling the space than the rod bodies 230 in the second embodiment. Therefore, deformation of the holes when performing the drawing is able to be suppressed even further. It should be noted that, rod bodies of a polygonal shape other than the triangular shapes may be used.

### Fourth Embodiment

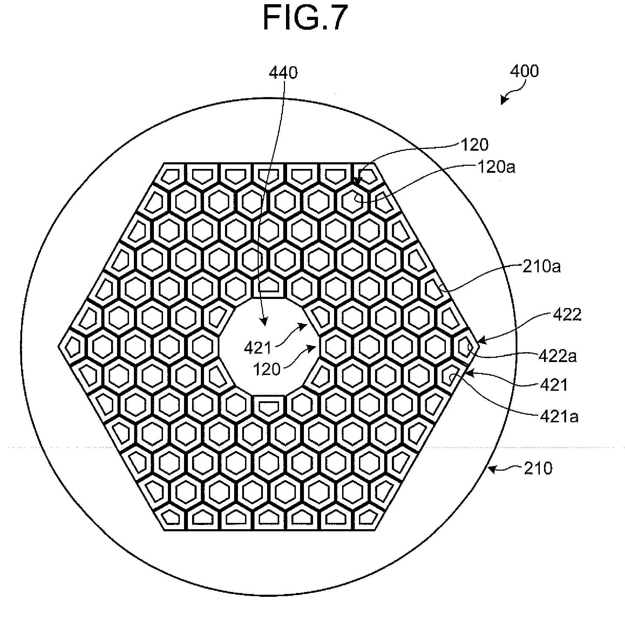

FIG. 7 is a schematic cross-sectional view of a preform to be used in a manufacturing method according to a fourth embodiment. As illustrated in FIG. 6, a preform 400 is formed by, like the preform 200 according to the second embodiment, inserting and stacking the hexagonal capillary tubes 120 in the jacket tube 210 having the tube-hole 210a of a hexagon, and thereafter forming a core-forming portion 440. However, in the preform 400, hollow pentagonal capillary tubes 421 and 422 having approximately pentagon-shaped tube-holes 421a and 422a and also having approximately pentagon-shaped outer shapes are inserted along an inner wall of the jacket tube 210. Accordingly, most of the space between the pentagonal capillary tubes 421 and 422 and the jacket tube 210 is eliminated, and thus it is possible to further suppress deformation of the holes when performing the drawing. Furthermore, since rod bodies for adjusting spaces do not need to be used, cost for their materials.is reducible.

It should be noted that, in the preform 400, the pentagonal capillary tubes 421 are further inserted to be positioned at a periphery of the core-forming portion 440. Accordingly, at the periphery of the core-forming portion 440, the hexagonal capillary tubes 120 and the pentagonal capillary tubes 421 are arranged alternately. Thereby, deformation of the core portion 11 of the PBGF 10 to be manufactured is suppressed even further.

### Fifth Embodiment

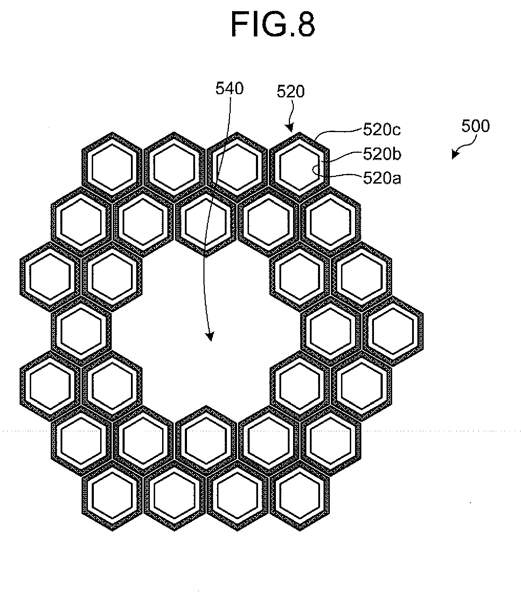

FIG. 8 is a partial enlarged schematic cross-sectional view of a preform used in a manufacturing method according to a fifth embodiment. In a preform 500 according to the fifth embodiment, hexagonal capillary tubes 520 are used as the hexagonal capillary tubes to be inserted into the jacket tube, each hexagonal capillary tube 520 including a tube-hole 520a of a hexagonal shape, an inner peripheral portion 520b, and an outer peripheral portion 520c formed on a periphery of the inner peripheral portion 520b. It should be noted that reference numeral 540 denotes a core-forming portion.

Herein the outer peripheral portions 520c of the hexagonal capillary tubes 520 are made of a material having a viscosity lower than that of the inner peripheral portions 520b. For example, the inner peripheral portions 520b are made of pure silica glass and the outer peripheral portions 520c are made of a silica glass added with chlorine, fluorine, or germanium.

In case of drawing this preform 500, due to heating in the drawing, since the outer peripheral portion 520c of each hexagonal capillary tube 520 is molten first and integrated with the outer peripheral portions 520c of its surrounding hexagonal capillary tubes 520, and thus a space originally present among the hexagonal capillary tubes 520 is filled. On the other hand, since the inner peripheral portions 520b are hard to be molten than the outer peripheral portions 520c, and thus has a higher effect of maintaining the shapes of the tube-holes 520a.

Therefore, in case of using this preform 500, due to the effect of filling in the space early by the melting of the outer peripheral portions 520c and the effect of the inner peripheral portions 520b maintaining the shapes of the holes, deformation of the holes is suppressed even further.

It should be noted that the present invention is not limited by the above-described embodiments. For example, although the PBGF is of the 7-cell type in the above-described embodiments, but the PBGF may be of the 19-cell-type or may include a core portion of another structure. In addition, the arrangement of the holes is not limited to the triangular lattice form, and may be of any arrangement that is able to form a photonic bandgap.

In addition, the present invention includes any configuration appropriately combining the above-described elements. For example, in the first embodiment, the pentagonal capillary tubes may be arranged around the core-forming portion as in the fourth embodiment, or the hexagonal capillary tubes having the inner peripheral portions and the outer peripheral portions as in the fifth embodiment may be used. Furthermore, in the fourth embodiment, pentagonal capillary tubes including inner peripheral portions and outer peripheral portions having a viscosity lower than that of the inner peripheral portions may be used. In addition, further effects or modification examples can be derived by an ordinary skilled person in the art easily. Therefore, further wide aspects of the present invention are not limited to the above-described embodiment and can be modified variously.

### Industrial Applicability

As described above, a PBGF according to the present invention is preferable for use in communication or non-communication field.

### Reference Signs List

10 PBGF
11 core portion
12 cladding portion
12a hole
100, 200, 300, 400, 500 preform
110, 210 jacket tube
120, 520 hexagonal capillary tube
120a, 210a, 421a, 422a, 520a tube hole
131, 132, 133, 331, 332 rod body
140, 240, 340, 440, 540 core-forming portion
421, 422 pentagonal capillary tube
520b inner peripheral portion
520c outer peripheral portion

## Claims

1. A method of manufacturing a photonic bandgap fiber including a core portion, and a cladding portion that is formed around the core portion and has holes arranged to form a photonic crystal in which the core portion is a crystal defect, the method comprising:
forming a preform by inserting, into a jacket tube, hexagonal capillary tubes having tube-holes shapes and outer shapes that are both approximately hexagonal; and
drawing the preform.

2. The method of manufacturing the photonic bandgap fiber according to claim 1, wherein rod bodies for adjusting spaces are inserted in a space between the jacket tube and the hexagonal capillary tubes in the forming.

3. The method of manufacturing the photonic bandgap fiber according to claim 2, wherein the rod bodies having outer shapes that are approximately polygonal are used in the forming.

4. The method of manufacturing the photonic bandgap fiber according to any one of claims 1 to 3, wherein the jacket tube having a tube-hole shape that is approximately hexagonal is used in the forming.

5. The method of manufacturing the photonic bandgap fiber according to claim 4, wherein pentagonal capillary tubes having tube-hole shapes and outer shapes that are both approximately pentagonal are inserted along an inner wall of the jacket tube in the forming.

6. The method of manufacturing the photonic bandgap fiber according to one of claims 1 to 5, wherein, in the forming, pentagonal capillary tubes having tube-hole shapes and outer shapes that are both approximately pentagonal are inserted to be positioned at a periphery of a core-forming portion for forming the core portion.

7. The method of manufacturing the photonic bandgap fiber according to any one of claims 1 to 6, wherein capillary tubes including inner peripheral portions and outer peripheral portions that are formed around the inner peripheral portions and have a viscosity lower than that of the inner peripheral portions are used as the pentagonal capillary tubes or the hexagonal capillary tubes in the forming.

8. The method of manufacturing the photonic bandgap fiber according to any one of claims 1 to 7, wherein, in the forming, the pentagonal capillary tubes or the hexagonal capillary tubes are inserted such that the number of layers of holes surrounding the core portion becomes equal to or greater than five.
